# EUROPÄISCHE PATENTSCHRIFT

(11) **EP 0 318 689 B1**
(45) Veröffentlichungstag und Bekanntmachung des Hinweises auf die Patenterteilung: **30.03.1994**
(21) Anmeldenummer: 88117432.0
(22) Anmeldetag: 19.10.1988
(51) Int. Cl.: H04B 7/24, H04J 3/06

(54) **Verfahren und Schaltungsanordnung zur Frequenznachstimmung einer Frequenzquelle**
Method and circuit for trimming the frequency of a frequency source
Procédé et circuit de correction d'accord d'une source de fréquence

(30) Priorität: 23.11.1987 CH 4552/87
(43) Veröffentlichungstag der Anmeldung: 07.06.1989
(73) Patentinhaber: FIRMA ERIKA KÖCHLER, CH-8833 Samstagern (CH)
(72) Erfinder: Köchler, Helmut, CH-8833 Samstagern (CH); Nestler, Günter, CH-8833 Samstagern (CH)
(74) Vertreter: Blum, Rudolf Emil Ernst

(56) Entgegenhaltungen:
- US-A- 4 651 103
- INTERNATIONAL CONFERENCE ON COMMUNICATIONS, Philadelphia, US, 14.-16. Juni 1976, Seiten 25.1-25.6; Dr. H.A. STOVER: "Timing and synchronization of switched digital communications networks"

## Beschreibung

Die Erfindung betrifft ein verfahren zur Frequenznachstimmung einer Frequenzquelle mindestens einer Nebenstation auf eine Referenzfrequenzquelle einer Referenzstation sowie eine Schaltungsanordnung für die Ausführung dieses Verfahrens.

In Uebermittlungsnetzen, bei welchen zwischen den einzelnen Stationen Frequenzübereinstimmung herrschen soll, stellt sich das Problem, dass die Frequenz der lokalen Oszillatoren durch äussere Einflüsse einem Drift unterworfen ist, so dass nach einer gewissen Zeit eine Frequenzablage zwischen einzelnen Stationen entsteht, die ausserhalb der zulässigen Toleranzen liegt. Soweit dieser Drift beherrschbar ist, etwa gemäss einer Temperatur-Frequenz-Charakteristik des Oszillatos, kann er lokal korrigiert werden. Es verbleibt jedoch, insbesondere falls kostengünstige Oszillatoren verwendet werden sollen, ein Driftanteil, z.B. durch Alterung, der nicht in der genannten Art kompensierbar ist. Deshalb war man bisher genötigt, an allen Stationen hochstabile und damit teure Quarzoszillatoren zu verwenden, ober aber eine Normfrequenz auszusenden, an der sich die Stationen orientieren konnten.

In der Publikation von Dr. H.A. Stover in INTERNATIONAL CONFERENCE ON COMMUNICATIONS, Philadelphia, US, 14. - 16. Juni 1976, Seiten 25.1 - 25.6 werden allgemein Systeme zur Nachstellung der Phase und Frequenz von Taktsignalen in digitalen Ubermittlungsnetzen umschrieben. Ein spezielles, solches System ist in der Publikation US-A-4 651 103 beschrieben. Dort wird von mehreren Stationen ausgegangen, deren Taktquellen alle dieselbe Frequenzstabilität haben. Es werden jeweils periodisch die Phasen der Taktquellen mit der Phase einer ReferenzTaktquelle gleichgestellt, indem als Frequenzteiler wirkende, an die Taktquellen angeschlossene Zähler gleichzeitig auf Null gesetzt werden. Das entsprechende Rücksetzsignal wird mit einer Häufigkeit von 8 kHZ dauernd übermittelt und belastet die Uebertragungswege. Da keine Mittel zur Frequenzbeeinflussung der Taktquellen vorgesehen sind, müssen diese alle mit entsprechend stabilen Oszillatoren ausgerüstet sein.

Aufgabe der Erfindung ist es, ein Verfahren und eine Schaltungsanordnung zu schaffen, welche es erlaubt, die geforderte Frequenzübereinstimmung auch ohne Verwendung von hochstabilen Oszillatoren bei allen Stationen und ohne zusätzliche Belastung der Uebertragungswege zu erzielen.

Dies wird erfindungsgemäss mit den in Anspruch 1 und 7 genannten Merkmalen bewerkstelligt.

Dabei reicht es aus, die Nachstimmung gemäss der zu erwartenden Drift z.B. in halbstündlichen bis stündlichen Intervallen vorzunehmen. Diese Intervalle können je nach der "Lebensgeschichte" des nachzustimmenden Oszillators mit der Zeit auch verlängert werden. Da der Nachstimmvorgang selbst innerhalb einer Zeit der Grössenordnung 100 ms ausgeführt werden kann, wie sich aus der nachfolgenden Beschreibung ergibt, besteht praktisch keine zusätzliche Belastung des Datenübertragungsweges.

Bei mehreren Nebenstationen können ferner alle Stationen gleichzeitig nachgestimmt werden. Die bei den Nebenstationen eingesetzten Quarzoszillatoren können damit so gewählt werden, dass die zulässigen Toleranzen für die Zeit zwischen den Nachstimmungen eingehalten werden, was die Verwendung kostengünstigerer Oszillatoren erlaubt.

Nachfolgend werden anhand der Zeichnungen Ausführungsbeispiele der Erfindung näher erläutert. Darin zeigen:
- Fig. 1: eine Schaltungsanordnung mit Referenz- und einer Nebenstation, und
- Fig. 2: eine Abwandlung der Schaltung der Nebenstation.

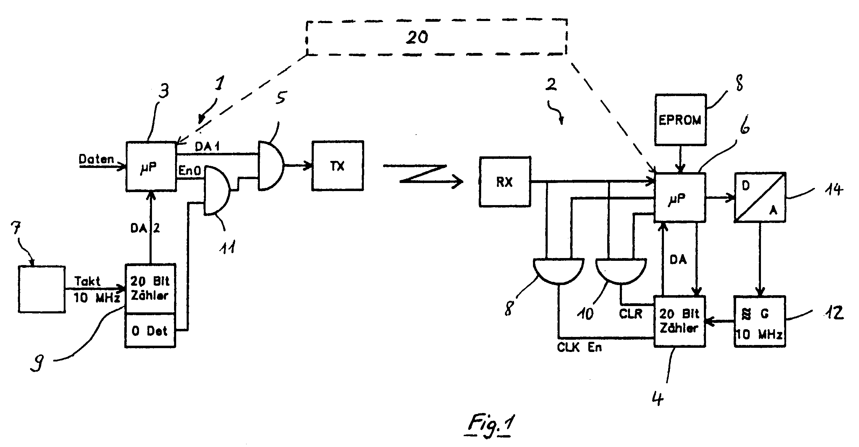

In Fig. 1 ist eine Schaltungsanordnung gezeigt mit einer Referenzstation 1 und einer Nebenstation 2. Obschon nur eine Nebenstation 2 gezeigt ist, versteht es sich, dass ein Netz mit mehreren solchen Stationen vorhanden sein kann, welche mit der Referenzstation 1 Verbindung haben. Die Referenzstation 1 besitzt einen Sender TX und jede Nebenstation 2 einen Empfänger RX, zwischen denen ein Uebertragungskanal gebildet ist. Die Daten laufen bei der Referenzstation über einen Mikroprozessor 3 und eine Datenleitung DA 1 sowie ein Tor 5 zum Sender TX und werden nach Empfang bei der Nebenstation durch einen Mikroprozessor 6 weiterverarbeitet. Die Referenzstation 1 besitzt einen 10 MHz-Referenzoszillator 7, der als hochstabiler Quarzoszillator oder als Caesium-Normale ausgebildet sein kann und an den Takteingang eines Zählers 9 angeschlossen ist. Der Zähler 9 ist im Ausführungsbeispiel ein 20-Bit-Dualzähler. Er ist mit einer Null-Detektionsschaltung 0 Det verbunden, die jeweils bei Erreichen der Nullstellung des Zählers einen Impuls aussendet, der über ein Tor 11 zum Sender TX gelangt.

Die Nebenstation 2 weist ebenfalls einen Zähler 4 auf, der entsprechend der Referenzstation als 20-Bit-Dualzähler ausgebildet sein kann. Sein Starteingng CLK En und sein Rücksetzeingang CLR sind je über Tore 8, 10 mit dem Empfänger RX und dem Mikroprozessor 6 verbunden. Der Mikroprozessor 6 weist einen EPROM-Speicher 8 zur Speicherung des Kennfelds für die Frequenznachstimmung auf und ist über einen Digital-Analogwandler 14 mit dem nachzustimmenden 10 MHz-Oszillator 12 verbunden. Durch Ausgabe entsprechender digitaler Steuersignale kann damit die Oszillatorfrequenz 12 durch Beeinflussung seiner Betriebsspannung gesteuert werden.

Die Stationen sind Teil eines Funkruf- oder paging-Systems, wie es z.B. in der Europäischen Patentanmeldung Nr. 198 448 beschrieben ist. Sie sind über Leitungen an eine gemeinsame Netzsteuereinheit 20 angeschlossen, welche (unter anderem) die Steuerbefehle zur Auslösung eines Nachstimmvorgngs ausgibt.

Der Beschreibung des Nachstimmvorgangs als solchem ist vorauszuschicken, dass die Zähler 9 und 4 zwischen den Nachstimmvorgängen laufend zählen. Jedem Nachstimmvorgang liegt damit eine Zählung im Intervall seit der jeweils vorangehenden Nachstimmung zu Grunde.

Der Nachstimmvorgang läuft nun wie folgt ab: Die Referenzstation 1 und die Nebenstation 2 erhalten beide von der Netzsteuereinheit den Befehl zur Frequenznachstimmung. Bei der Referenzstation 1 wird damit die Datenleitung gesperrt und der Mikroprozessor 3 gibt den Eingang EnO des Tors 11 frei. Erreicht der 20-Bit-Zähler 9 die Nullstellung, so wird über die Nulldetektionsschaltung ODet ein Stopimpuls unter Umgehung des Mikroprozessors über das Tor 11 zum Sender geleitet. Der Zähler 9 läuft weiter, so dass nach einem Durchlauf von der Nulldetektionsschaltung ODet ein weiterer Impuls als Rücksetz- bzw. Startimpuls erzeugt und gesendet wird. Der zeitliche Abstand zwischen diesen Impulsen beträgt bei einer Oszillator-Frequenz von 10 MHz damit 104,86 ms. Damit ist auf der Seite der Referenzstation der Frequenznachstimmungsvorgang beendet. Der Zähler 9 läuft, wie erwähnt, für den nächsten Nachstimmvorgang weiter.

In der Nebenstation 2 schaltet der Mikroprozessor 6 nach erhalt des Befehls für die Frequenznachstimmung aus der Netzsteuereinheit 20 den Eingang CLK En des 20-Bit-Zählers 4 über das Tor 8 frei. Beim Eintreffen des Stopimpulses wird der Zähler 4 gestoppt und die Zählerinformation durch den Prozessor 6 übernommen. Dann wird der Eingang CLK En gesperrt und der Eingang CLR freigeschaltet. Bei Eintreffen des Rücksetz- bzw. Startimpulses wird der Zähler 4 auf Null zurückgesetzt und die Zählung in der Nebenstation beginnt von neuem bis zur nächsten Nachstimmung.

Liegt Frequenzübereinstimmung vor, so hat der 20-Bit-Zähler gleich wie der Zähler 9 im Intervall seit der letzten Nachstimmung ebenfalls eine ganze Zahl von Durchläufen absolviert und damit gerade wieder seine Nullstellung erreicht. Bei Nichtübereinstimmung gibt die Differenz zur Nullstellung ein Mass für die Frequenzablage. Hat der Zähler 4 nicht einen ganzen Durchlauf absolviert, weil die Frequenz der Nebenstation unter dem Sollwert liegt, zeigt der Zähler einen hohen Zählerstand unterhalb dem maximalen Zählerstand. Liegt die Frequenz der Nebenstation dagegen über dem Sollwert, so hat der Zähler 4 den maximalen Zählerstand überlaufen, so dass dann ein sehr tiefer Zählerstand vorliegt. Auf diese Weise lässt sich auf einfache Weise die Richtung der Frequenzablage feststellen.

Die so gewonnenen Korrekturdaten werden sodann durch den Mikroprozessor 6 zur Erzeugung eines Steuersignals weiterverarbeitet. Die Korrekturdaten werden zu den im Kennfeld im Speicher 8 gespeicherten Daten addiert, wonach über dem Digital-Analog-Wandler 14 dem Oszillator 12 ein analoges Steuersignal zugeführt wird, womit er seine Frequenz in der bestimmten Weise korrigiert.

Der beschriebene Nachstimmvorgang muss nicht unbedingt durch einen Befehl aus einer Netzsteuereinheit ausgelöst werden, wie dies im vorliegenden Ausführungsbeispiel erläutert ist. Der Befehl für den Nachstimmvorgang kann auch von der Referenzstation ausgehen und den Nebenstationen in einem speziellen Telegramm über die Datenleitung zwischen Referenz- und Nebenstation übermittelt werden. Auf dieses Telegramm hin wird dann in den Nebenstationen der Eingang CLK En des Zählers 4 vor der Uebermittlung des Stopimpulses freigeschaltet.

Eine weitere Möglichkeit der Auslösung des Nachstimmvorgangs beruht auf synchron laufenden Uhren in Referenz- und Nebenstationen sowie vorgegebenen Nachstimmzeiten. In den Nebenstationen schaltet der Mikroprozessor 6 jeweils zu einer vorgegebenen Zeit, zu welcher das Eintreffen des Stopimpulses zu erwarten ist (z.B. inneralb eines Zeitfensters von 100 ms) den Eingang CLK En des Zählers 4 frei, wie vorstehend beschrieben. Der übrige Nachstimmvorgang läuft bei den beiden Auslösevarianten im übrigen auf die erläuterte Art ab.

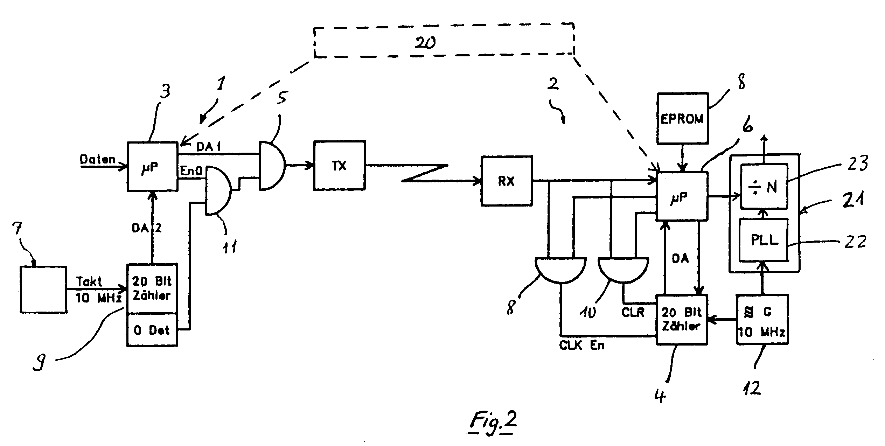

In Fig. 2 ist eine Abwandlung der Schaltung von Fig. 1 gezeigt, welche sich lediglich dadurch unterscheidet, dass anstelle der analogen Nachregelung des Oszillators 12 eine digitale Korrektur der Drift erfolgt. Die digitale Korrektur kann an einem Taktgenerator 21 erfolgen, der die Bitrate (von z.B. 512 bits/sec) und die Zeitabstände der Digitalsignale für die Datenübertragung vom Oszillator 12 ableitet. Der Taktgenerator weist hierzu eine PLL-Schaltung 22 sowie eine Teilerschaltung 23 auf, deren Teiler N gemäss dem ermittelten Zählergebnis einstellbar ist.

Der Nachstimmvorgang läuft dabei in der bereits erläuterten Weise ab, so dass auf eine erneute Beschreibung verzichtet wird.

Die beiden Ausführungen legen die mittels dem Zähler 9 der Referenzstation 1 erzeugten und an die Nebenstation übermittelten Start- (Rücksetz-) bzw. Stopsignale in der Referenzstation und den Nebenstationen ein gleich langes Zählintervall fest, während welchem beidseitig die Oszillatorimpulse gezählt werden. Dieses Intervall entspricht vorzugsweise einer ganzen Zahl von Zählerdurchläufen des Referenzstationszählers 9, kann im übrigen jedoch der Qualität der bei den Nebenstationen 2 verwendeten Oszillatoren angepasst werden. Der zeitliche Abstand der Nachstimmungen kann z.B. zwischen einer halben Stunde und einer Stunde liegen.

Die kurze Dauer des Nachstimmvorgangs von z.B. 104.9 ms vermeidet einen wesentlichen Einfluss von Langzeitschwankungen der Laufzeiten im Uebertragungskanal, da innerhalb der ca. 100 ms, welche zwischen Start- und Stoppimpuls verstreichen, die Signallaufzeit im wesentlichen unverändert bleibt.

Das erläuterte Verfahren ermöglicht es nicht nur, bei den Nebenstationen relativ billige Oszillatoren zu verwenden, sondern gestattet zudem die Bitrate der Uebertragung zu erhöhen, weil mittels den Oszillatoren die Zeitdifferenz zwischen den Digitalsignalen festgelegt wird, woraus sich wiederum die maximal mögliche Bitrate ergibt.

## Patentansprüche

1. Verfahren zur Frequenznachstimmung einer Frequenzquelle (12) mindestens einer Nebenstation (2) auf eine Frequenzquelle (7) einer Referenzstation (1) in einem Funkrufnetz, wobei an die Frequenzquellen von Neben- und Referenzstation je ein davon getakteter Zähler (4, 9) angeschlossen ist, dadurch gekennzeichnet, dass bei der Referenzstation (1) und der Nebenstation (2) jeweils während gleich langen Intervallen gezählt wird, und durch die Zähldifferenz zwischen der Nebenstation und der Referenzstation eine entsprechende Frequenzkorrektur bei der Nebenstation (2) vorgenommen wird.

2. Verfahren nach Anspruch 1, dadurch gekennzeichnet, dass Beginn und Ende des Intervalls beim Referenzstationszähler (9) vorbestimmten Zählerständen dieses Zählers entsprechen und jeweils als Start- und Stopp-Signale an den Nebenstationszähler (4) übermittelt werden.

3. Verfahren nach Anspruch 2, dadurch gekennzeichnet, dass die vorbestimmten Zählerstände des Referenzstationszählers (9) gleich gross sind und jeweils ein Zählerdurchlauf nach dem Stoppsignal ein Startsignal erzeugt wird.

4. Verfahren nach einem der vorangehenden Ansprüche 2 oder 3, dadurch gekennzeichnet, dass die Zählerstände des Referenzstationszählers (9) jeweils durch einen Nulldurchgang des Zählers gegeben sind.

5. Verfahren nach Anspruch 4, dadurch gekennzeichnet, dass beim Eintreffen des Stoppsignals der Zählerstand des Nebenstationszählers (4) festgestellt wird, und dieser durch das nachfolgende Startsignal auf Null gesetzt wird.

6. Schaltungsanordnung für die Frequenznachstimmung der Frequenzquelle (12) mindestens einer Nebenstation (2) auf die Frequenzquelle (7) einer Referenzstation (1) eines Uebermittlungsnetzes, wobei die Referenzstation eine Sendeeinrichtung (TX) und die Nebenstation eine Empfangseinrichtung (RX) aufweist, dadurch gekennzeichnet, dass die Frequenzquelle der Referenzstation (1) einen hochstabilen, und die Frequenzquelle der Nebenstation (2) einen nachstimmbaren Oszillator aufweist, wobei an den Oszillator (7) der Referenzstation (1) ein Zähler (9) angeschlossen ist, der mit einer Steuerschaltung (3) verbunden ist zur Erzeugung und Uebermittlung von Start- Stop-Signalen an die Nebenstation vorgegebenen Zählerständen dieses Zählers (9), und ferner gekennzeichnet durch einen an den Oszillator (12) der Nebenstation angeschlossenen Zähler (4), der mit einer Steuerschaltung (6, 8, 14) für die Frequenznachstimmung verbunden ist, welche aus dem Zählergebnis des Nebenstation-Zählers (4) im Intervall zwischen eintreffenden Start- Stop-Signalen aus der Referenzstation ein Steuersignal zur Nachstimmung des Oszillators (12) der Nebenstation erzeugt.

7. Schaltungsanordnung nach Anspruch 6, dadurch gekennzeichnet, dass die Zähler (9, 4) der Referenzstation (1) und der Nebenstation (2) Dualzähler mit derselben Stufenzahl sind.

8. Schaltungsanordnung nach einem der vorangehenden Ansprüche 6 oder 7, dadurch gekennzeichnet, dass die Steuerschaltung (6, 8, 14) der Nebenstation (2) für die Frequenznachstimmung einen Mikroprozessor (6) mit gespeichertem Kennfeld für die Erzeugung eines Signals zur Frequenznachstimmung des Oszillators (12) aufweist, welcher über einen Digital-Analogwandler (14) mit dem Steuereingang des Oszillators verbunden ist.

9. Schaltungsanordnung nach einem der vorangehenden Ansprüche 6 oder 7, dadurch gekennzeichnet, dass die Steuerschaltung (6, 21 - 23) der Nebenstation (2) einen Modulationstakt-Generator (21) mit digital steuerbarer Teilerschaltung (23) aufweist.

## Claims

1. Method for retuning the frequency of a frequency source (12) of at least one substation (2) to a frequency source (7) of a reference station (1) in a radio transmission network, whereby the frequency sources of the substation and the reference station are each connected to a counter which is timed from same, characterized by a counting at the reference station (1) and at the substation (2), respectively, during intervals of the same length, and by making a correction of the frequency at the substation (2) corresponding to the difference of count between the substation and the reference station (1).

2. Method according to claim 1, characterized in that start and end of the interval of the reference station counter (9) correspond to predetermined counter states of this counter and are respectively transmitted to the substation counter (4) as start and stop signals.

3. Method according to claim 2, characterized in that the predetermined counter readings of the reference station counter (9) are of the same magnitude and a respective counter run after the stop signal a start signal is produced.

4. Method according to one of the claim 2 or 3, characterized in that the respective counter states of the reference station counter are defined by a zero state of the counter.

5. Method according claim 4, characterized in that upon receipt of the stop signal the counter state of the substation counter (4) is determined, and in that it is reset to zero by the subsequent start signal.

6. Circuit arrangement for the retuning of the frequency of a frequency source (12) of at least one substation (2) to the frequency source (7) of a reference station (1) of a transmission network, whereby the reference station comprises a transmitting device (TX) and the substation a receiving device (RX), characterized in that the frequency source of the reference station (1) comprises a high precision and the frequency source of the substation (2) a retuneable oscillator, whereby a counter is connected to the oscillator (7) of the reference station (1), which is connected to a control circuit (3) for the generation and transmission of start-stop-signals to the predetermined counter states of this counter (9) of the substation, and characterized further by a counter (4) connected to the oscillator (12) of the substation (4) which is connected to a control circuit (6,8,14) for the retuning of the frequency, which produces from the counter result of the substation counter (4) in the interval between start and stop signals received, a control signal out of the reference station for a retuning of the oscillator (12) of the substation.

7. Circuit arrangement according to claim 6, characterized in that the counters (9,4) of the reference station (1) and the substation are dual counters with the same bit number.

8. Circuit arrangement according to one of the preceding claims 6 or 7, characterized in that the control circuit (6,8,14) of the substation includes for the retuning of the frequency a microprocessor (6) having a stored characteristic for the generation of a signal for the retuning of the frequency of the oscillator (12), which is connected via a digital/analogue converter (14) to the control input of the oscillator.

9. Circuit arrangement according to one of the preceding claims 6 or 7, characterized in that the control circuit (6, 21-23) of the substation (2) comprises a modulation clock generator (21) with a digitally controllable divider circuit (23).

## Revendications

1. Procédé pour accorder dans un réseau d'appel hertzien la source d'oscillation (12) d'au moins une station auxiliaire (2) à la source d'oscillation (7) d'une station de référence (1) de ce réseau, la station auxiliaire et la station de référence comportant chacune un compteur (4, 9) actionné par leur source d'oscillation respective, caractérisé en ce que l'on compte pendant des intervalles de même longueur à la station de référence (1) et à la station auxiliaire (2) et qu'on utilise la différence de comptage entre la station de référence et la station auxiliaire (2) pour corriger la fréquence de cette dernière en conséquence.

2. Procédé selon la revendication 1, caractérisé en ce que le début et la fin de l'intervalle correspondent à des positions prédéterminées du compteur (9) de la station de référence et sont transmis sous forme de signaux de marche et d'arrêt au compteur (4) de la station auxiliaire.

3. Procédé selon la revendication 2, caractérisé en ce que les positions prédéterminées du compteur (9) de la station de référence sont les mêmes, et qu'un signal de marche est émis un cycle du compteur après le signal d'arrêt.

4. Procédé selon une des revendications 2 ou 3, caractérisé en ce que les positions du compteur (9) de la station de référence sont celles du passage à zéro du compteur.

5. Procédé selon la revendication 4, caractérisé en ce que la position du compteur (4) de la station auxiliaire est observée lors de l'arrivée du signal d'arrêt, et que ce compteur est remis à zéro par le signal de marche suivant.

6. Circuit pour accorder la fréquence de la source d'oscillation (12) d'au moins une station auxiliaire (2) avec la source d'oscillation (7) d'une station de référence (1) d'un réseau de transmission, la station de référence disposant d'un émetteur (TX) et la station auxiliaire d'un récepteur (RX), caractérisé en ce que la source de fréquence de la station de référence (1) comporte un oscillateur extrêmement stable et la source de fréquence de la station auxiliaire (2) comporte un oscillateur ajustable, un compteur (9) étant connecté à l'oscillateur (7) de la station de référence (1), ce compteur étant connecté à un circuit de commande (3) pour générer et transmettre à la station auxiliaire et en fonction de certaines positions prédéterminées de ce compteur (9) des signaux de marche et d'arrêt, ainsi que par un compteur (4) connecté à l'oscillateur (12) de la station auxiliaire et à un circuit de commande (6, 8, 14) pour accorder la fréquence, ce circuit déterminant un signal de commande pour l'ajustement de l'oscillateur (12) de la station auxiliaire à partir du résultat du comptage effectué par le compteur (4) de la station auxiliaire pendant l'intervalle qui s'écoule entre les signaux de marche et d'arrêt émis par la station de référence.

7. Circuit selon la revendication 6, caractérisé en ce que les compteurs (9, 4) des stations de référence (1) et auxiliaire (2) sont des compteurs binaires ayant le même nombre d'étages.

8. Circuit selon une des revendications 6 ou 7, caractérisé en ce que le circuit de commande (6, 8, 14) de la station auxiliaire (2) comporte un microprocesseur (6) avec un ensemble de données mémorisées pour générer un signal destiné à ajuster la fréquence de l'oscillateur (12) et connecté par l'intermédiaire d'un convertisseur digital-analogue (14) avec l'entrée de commande de l'oscillateur.

9. Circuit selon une des revendications 6 ou 7, caractérisé en ce que le circuit de commande (6, 21 - 23) de la station auxiliaire (2) comporte un générateur (21) de signaux de modulation périodiques comprenant un circuit diviseur (23) à commande digitale.
